# EUROPEAN PATENT SPECIFICATION

(11) **EP 4 026 473 B1**
(45) Date of publication and mention of the grant of the patent: **06.05.2026**
(21) Application number: 20860914.9
(22) Date of filing: 18.08.2020
(51) Int. Cl.: A47L 11/28, A47L 11/30, A47L 11/40, G05D 1/00

(54) **CLEANING ROBOT AND CONTROL METHOD THEREFOR**
REINIGUNGSROBOTER UND STEUERUNGSVERFAHREN DAFÜR
ROBOT DE NETTOYAGE ET PROCÉDÉ DE COMMANDE ASSOCIÉ

(30) Priority: 05.09.2019 CN 201910837572
(43) Date of publication of application: 13.07.2022
(73) Proprietor: Beijing Roborock Innovation Technology Co., Ltd., Beijing (CN)
(72) Inventor: NIU, Yansheng, Beijing 100085 (CN); CONG, Yiming, Beijing 100085 (CN)
(74) Representative: Studio Torta S.p.A.
(86) International application number: PCT/CN2020/109840
(87) International publication number: WO 2021/042982

(56) References cited:
- CN-A- 104 526 699
- CN-A- 106 264 357
- CN-A- 106 901 665
- CN-A- 109 846 427
- CN-A- 110 507 253
- CN-U- 207 755 209
- CN-U- 208 176 529
- CN-U- 210 931 181
- JP-A- 2006 026 298
- US-A1- 2012 167 917
- US-A1- 2012 311 810
- US-A1- 2019 191 952
- US-B1- 9 265 396

## Description

### TECHNICAL FIELD

The present invention relates to the technical field of control, and in particular, to a cleaning robot and a control method thereof.

### BACKGROUND

With the development of technologies, various autonomous cleaning devices, such as automatic sweeping robots, automatic mopping robots, and the like have appeared. An autonomous cleaning device may autonomously perform cleaning, to bring convenience to a user. Taking an autonomous sweeping robot as an example, automatic cleaning of a to-be-cleaned region is implemented through techniques such as direct sweeping and vacuum dust collecting. A sweeping operation may be implemented through a sweeping strip and a brushroll disposed at a bottom portion of the autonomous cleaning device.

For an autonomous cleaning robot having a mopping function, during mopping, a water tank is typically required to be disposed on the robot, to provide a water source required for mopping. In a case of being used at home, existing autonomous cleaning robots has a poor effect in mopping some regions such as a carpet and foot pads outside a bathroom or a kitchen, and secondary pollution to a mopping cleaning portion is further caused. Therefore, the sweeping robot is required to autonomously avoid these regions. US 2019/0191952 A1 discloses an autonomous floor cleaner which can include a brush chamber, a brushroll rotatably mounted in the brush chamber, a controller for controlling the operation of the autonomous floor cleaner, and a fluid delivery system with a supply tank and at least one fluid distributor configured to deposit cleaning fluid onto a surface to be cleaned.

### SUMMARY

The present invention comprises a cleaning robot and a control method thereof as defined in the claims. Embodiments that do not fall within the scope of the claims are to be interpreted as examples useful for understanding the invention. In view of this, embodiments of the present invention provides a cleaning robot and a control method thereof for enabling the robot to mop while avoiding a non-mopping region.

According to a first aspect of embodiments of the present invention, an embodiment of the present invention provides a cleaning robot, including:
a chassis;
a fluid applicator, carried on the chassis and configured to distribute a cleaning fluid on at least part of a cleaning width;
a fluid storage apparatus, detachably connected to the chassis, wherein the fluid storage apparatus is in communication with the fluid applicator and configured to apply the cleaning fluid distributed by the fluid applicator to a ground;
an in-position sensor, disposed in a recess of the chassis in which the fluid storage apparatus is mounted, and configured to detect whether the fluid storage apparatus is in position and to report an in-position state signal of the fluid storage apparatus to a control system; and
the control system, carried on the chassis and configured to plan a cleaning path according to the in-position state signal of the fluid storage apparatus and control the fluid applicator to distribute the cleaning fluid according to the cleaning path.

In an embodiment of the present disclosure, the fluid applicator includes a pump which is configured to distribute the cleaning fluid on the at least part of the cleaning width.

In an embodiment of the present disclosure, the in-position sensor detects in real time whether the fluid storage apparatus is in position, in a case that a detection signal indicates that the fluid storage apparatus is in position, detecting again after a time interval, and in a case that the detection signal indicates that the fluid storage apparatus is not in position, reporting an out-of-position state signal to the control system and stopping detecting.

In an embodiment of the present disclosure, the cleaning robot further includes:
a navigation apparatus, receiving information about an operation region of the cleaning robot, the operation region including a mopping region and a non-mopping region, wherein the non-mopping region is activated in a case that the fluid storage apparatus is in position and is disabled in a case that the fluid storage apparatus is not in position.

In an embodiment of the present disclosure, the cleaning robot further includes:
a position alarm, wherein the navigation apparatus detects in real time whether there is an intersection between an edge of a front half portion of the cleaning robot and the non-mopping region, and if there is an intersection, the position alarm is trigged to enable the cleaning robot to retreat outside of the non-mopping region.

In an embodiment of the present disclosure, the cleaning robot further includes:
a wheel type drive, supporting the chassis and being operable to operate the cleaning robot on an operation surface of the cleaning robot; and
one or more cleaning elements, carried on the chassis to clean an entirety of the cleaning width.

According to a second aspect of a specific implementation of the present disclosure, an embodiment of the present disclosure provides a method of control a cleaning robot, including:
detecting in real time whether a fluid storage apparatus is in position and reporting an in-position state signal of the fluid storage apparatus to a control system; and
planning a cleaning path according to the in-position state signal of the fluid storage apparatus and controlling a fluid applicator to distribute a cleaning fluid according to the cleaning path.

In an embodiment of the present disclosure, detecting in real time whether the fluid storage apparatus is in position includes:
detecting in real time whether the fluid storage apparatus is in position, in a case that a detection signal indicates that the fluid storage apparatus is in position, detecting again after an interval, and in a case that the detection signal indicates that the fluid storage apparatus is not in position, reporting an out-of-position state signal to the control system and stopping detecting. In an embodiment of the present disclosure, after detecting in real time whether the fluid storage apparatus is in position and reporting the in-position state signal of the fluid storage apparatus to the control system, the method further includes:
receiving information about an operation region of the cleaning cleaning robot, the operation region comprising a mopping region and a non-mopping region, wherein the non-mopping region is activated in a case that the fluid storage apparatus is in position and is disabled in a case that the fluid storage apparatus is not in position.

In an embodiment of the present disclosure, data of the non-mopping region is described by a quadrangle consisting of coordinates of four vertex.

In an embodiment of the present disclosure, the control method further includes:
detecting in real time whether there is an intersection between an edge of a front half portion of the cleaning robot and the non-mopping region, and if there is an intersection, enabling the cleaning robot to retreat outside of the non-mopping region.

In an embodiment of the present disclosure, in a case that the non-mopping region is activated, the quadrangle of the non-mopping region is labeled as an obstacle.

In an embodiment of the present disclosure, the non-mopping region is planned by the navigation apparatus autonomously in a traveling process or set by a user.

Compared with the existing technology, the present disclosure has at least the following technical effects:
The cleaning robot of the present disclosure can operate based on a preset non-mopping region. In a case of traveling to the non-mopping region, the cleaning robot can learn, from a map, about that the region is not suitable for being mopped, and may avoid the non-mopping region, thereby avoiding secondary pollution due to mopping unsuitable regions, improving user experience and improving cleaning efficiency.

### BRIEF DESCRIPTION OF DRAWINGS

To explain the technical solutions according to the embodiments of the present disclosure more clearly, the accompanying drawings used in the description of the embodiments will be briefly described below. Obviously, the accompanying drawings in the following description are only some embodiments of the present disclosure, and one of ordinary skill in the art can further obtain other drawings based on these accompanying drawings without creative effects.
FIG. 1 illustrates a schematic view of an application scenario according to an embodiment of the present disclosure;
FIG. 2 illustrates a three-dimensional view of a structure of a cleaning robot according to an embodiment of the present disclosure;
FIG. 3 illustrates a top view of a structure of a cleaning robot according to an embodiment of the present disclosure;
FIG. 4 illustrates a bottom view of a structure of a cleaning robot according to an embodiment of the present disclosure;
FIG. 5 illustrates a block diagram of a structure of a cleaning robot according to an embodiment of the present disclosure;
FIG. 6 illustrates a flowchart of a method of controlling a cleaning robot according to an embodiment of the present disclosure; and
FIG. 7 illustrates a block diagram of a water tank structure of a cleaning robot according to an embodiment of the present disclosure; and
FIG. 8 illustrates a schematic view of an electronic structure of a cleaning robot according to an embodiment of the present disclosure.

### DESCRIPTION OF EMBODIMENTS

To make the objectives, technical solutions, and advantages of the embodiments of the present disclosure clearer, the following clearly and completely describes the technical solutions in the embodiments of the present disclosure with reference to the accompanying drawings in the embodiments of the present disclosure. Obviously, the described embodiments are merely some embodiments, other than all embodiments, of the present disclosure. All other embodiments derived based on the embodiments of the present disclosure by one of ordinary skill in the art without creative efforts shall fall within the protection scope of the present disclosure.

It should be understood that although the terms "first", "second", "third", and the like may be used to describe "XXX" in the embodiments of the present disclosure, the "XXX" are not limited to the terms. These terms are only used to distinguish "XXX" from each other. For example, without departing from the scope of the embodiments of the present disclosure, the "first XXX" may alternatively be referred to as the "second XXX", and similarly, the "second XXX" may alternatively be referred to as the "first XXX".

In order to describe the behaviors of the cleaning robot more clearly, the following direction definitions are provided:

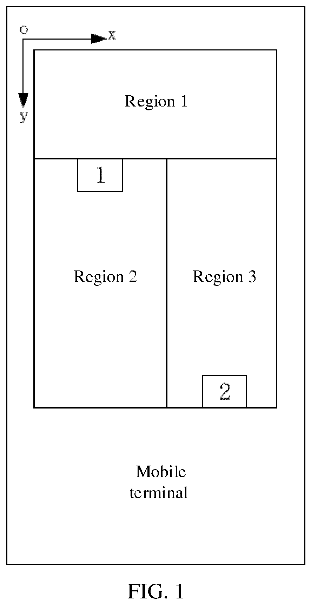

FIG. 1 is a diagram illustrating an application scenario of the present disclosure. A user controls a cleaning device to clean a cleaning region, including (for example) a cleaning region 1, a cleaning region 2, and a cleaning region 3, through a mobile terminal such as a mobile phone. The user may set that the cleaning device goes to any one or more of the regions for cleaning. In addition, the user may designate any cleaning non-mopping region 1 or 2 in any cleaning region, such as a position at a door of a bathroom, and a position under a sofa. After completing setting, the user can send a set cleaning region instruction to the cleaning robot through a local area network, and the cleaning robot goes to the designated region to operate according to the instruction by the user.

The autonomous cleaning robot performs cleaning operation in the designated region. In a case that a cleaning operation is completed or in a case that power is low, the autonomous cleaning robot may automatically search for a position of a charging station. After the position of the charging post is determined, the autonomous cleaning robot automatically travels to the position of the charging station for charging.

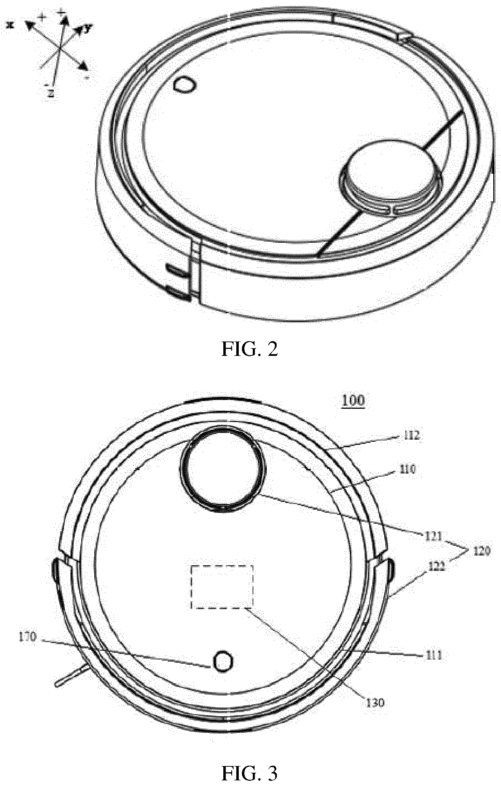

As illustrated in FIG. 2, the autonomous cleaning robot 100 may travel on a floor through various combinations of movements with respect to the following three mutually perpendicular axes defined by a machine body 110: a front-rear axis X, a transverse axis Y, and a central vertical axis Z. A forward driving direction along the front-rear axis X is referred as "forward", and a backward driving direction along the front-rear axis X is referred as "backward". The direction of the transverse axis Y is a direction in which an axis defined by a center point of a drive wheel module 141 extends between a right wheel and a left wheel of the autonomous cleaning robot.

The autonomous cleaning robot 100 may rotate around the Y axis. "Upward" designates a case that a front portion of the autonomous cleaning robot 100 is tilted upward, and a rear portion is tilted downward; and "down" designates a case that the front portion of the autonomous cleaning robot 100 is tilted downward, and the rear portion is tilted upward. In addition, the autonomous cleaning robot 100 may rotate around the Z axis. In a forward direction of the autonomous cleaning robot 100, "turn right" designates a case that the autonomous cleaning robot 100 is turned to a right side of the X axis; and "turn left" designates a case that the autonomous cleaning robot 100 is turned to a left side of the X axis.

As illustrated in FIG. 3, the autonomous cleaning robot 100 includes a machine body 110, a sensing system 120, a control system, a drive system 140, a cleaning system 150, an power supply system 160, and a human-machine interaction system 170.

The machine body 110 includes a front portion 111, a rear portion 112, and a chassis portion 113. The machine body 110 has a substantially circular shape (both the front portion and the rear portion are circular), and may alternatively have other shapes, including, but not limited to, a substantially D shape in which the front portion is square and the rear portion is circular.

As illustrated in FIG. 3, the sensing system 120 includes a location determining apparatus 121 located above the machine body 110, a buffer 122 disposed at the front portion 111 of the machine body 110, and a sensing device such as a cliff sensor 123 and an ultrasonic sensor, an infrared sensor, a magnetometer, an accelerometer, a gyroscope, and an odometer, and provides various position information and movement state information of the autonomous cleaning robot to a control system 130. The location determining apparatus 121 includes, but is not limited to, a camera and a laser distance sensor (LDS). The following takes the laser distance sensor adopting a triangle ranging method as an example to explain how to determine the location. The basic principle of the triangle ranging method is based on an equivalence relationship between similar triangles, which is not described in detail herein.

The laser distance sensor includes a light emitting unit and a light receiving unit. The light emitting unit may include a light source that emits light, and the light source may include a light emitter, such as an infrared or visible light emitting diode (LED) that emits infrared light or visible light. Alternatively, the light source may be a light emitter that emits a laser beam. In this embodiment, the laser diode (LD) is used as a light source. In an embodiment of the present disclosure, due to the monochrome, directivity and collimating characteristics of a laser beam, adopting a light source of a laser beam may make a relatively accurate measurement with respect to other light. The laser diode (LD) may emit a spot laser to measure two-dimensional location information of an obstacle, or may emit a line laser to measure three-dimensional location information of an obstacle within a range.

A light receiving unit may include an image sensor on which a light spot reflected or scattered by an obstacle is formed. The image sensor may be an assembly of a plurality of unit pixels in a single row or a plurality of rows. These light receiving elements may convert optical signals into electric signals. The image sensor may be a complementary metal-oxide-semiconductor (CMOS) sensor or a charge-coupled device (CCD) sensor. In an embodiment of the present disclosure, the CMOS is adopted due to its advantages in cost. Moreover, the light receiving unit may include a light receiving lens assembly. Light reflected or scattered by an obstacle may pass through the light receiving lens assembly to form an image on the image sensor. The light receiving lens assembly may include a single lens or a plurality of lenses. A base may support the light emitting unit and the light receiving unit, which are arranged on the base and are spaced apart from each other by a distance. To range an obstacle around the autonomous cleaning robot, the base may be rotatably disposed on the machine body 110. Or, a rotating element may be provided to rotate the emitted light emitter and the received light, without rotating the base. A rotational angular velocity of the rotating element may be obtained by arranging a light coupling element and a code disc. The light coupling element senses a tooth notch in the code disc, and an instantaneous angular velocity may be obtained by dividing a circumferential length of the tooth notch by a notch passing time. The greater a density of tooth notches in the code disc is, the more accuracy the measurement is and the more precision the measurement is, while the more precision the structure is, and the greater the calculation complexity is. On the contrary, the less a density of tooth notches in the code disc is, the less accuracy the measurement is and the less precision the measurement is, while the less precision the structure is, and the less the calculation complexity is, thereby reducing cost.

A data processing device such as a DSP connected to the light receiving unit records distance values of obstacles at all angles relative to a 0-degree angle of the cleaning robot and transmits the distance values to a data processing unit of a control system 130, such as an application processor (AP) including a CPU, wherein the CPU obtains a current location of the robot though performing a particle filtering-based locating algorithm, so that the robot create a map for navigation based on the location. In an embodiment of the present disclosure, the locating algorithm adopts the simultaneous localization and mapping (SLAM).

The laser distance sensor based on the triangular ranging method may measure a distance value at an infinite distance beyond a distance in principle, but in fact, a long-distance measurement, for example, more than 6 meters, is very difficult to achieve mainly due to the restriction of a size of pixel units of the sensor of the light receiving unit and further influences of a photoelectric conversion speed of the sensor, a data transmission speed between the sensor and the connected DSP, and a calculation speed of the DSP. Change in a measured result due to effect on the laser distance sensor apparatus by a temperature may be intolerable for the system mainly due to the fact that thermal expansion and deformation of a structure between the light emitting unit and the light receiving unit causes angle changes between incident light and emergent light. A temperature drift may also occur to the light emitting unit and the light receiving unit. After the laser distance sensor is operated for a long time, deformation caused by accumulation of various factors such as temperature changes and vibration may further severely affect the measurement result. Accuracy of the measurement result directly determines accuracy of creating map, which is a basis for the autonomous cleaning robot to further perform a strategy.

As illustrated in FIG. 3, the front portion 111 of the machine body 110 may carry a buffer 122. In a case that the drive wheel module 141 propels the cleaning robot to travel on the floor in a cleaning process, the buffer 122 detects one or more events in a traveling path of the autonomous cleaning robot 100 through a sensor system, such as an infrared sensor. The autonomous cleaning robot 100 may control the drive wheel module 141 to respond to events, such as obstacles and walls, detected by the buffer 122, to for example stay away from the obstacles.

The control system 130 is mounted on a main circuit board of the machine body 110, including a computing processor, such as a central processing unit and an application processor, in communication with a non-transitory memory, such as a hard disk, a flash memory, and a random access memory, and based on obstacle information fed back by the laser distance sensor, the application processor create an instant map of the environment where the robot is located through a locating algorithm, such as the SLAM. In combination with distance information and speed information fed back by the sensing apparatus, such as the buffer 122, the cliff sensor 123 and the ultrasonic sensor, the infrared sensor, the magnetometer, the accelerometer, the gyroscope, and the odometer, the control system 130 comprehensively determines which operation state the autonomous cleaning robot is currently in, such as crossing a door threshold, climbing onto a carpet, being located at a cliff, being stuck at an upper position or at a lower position, a dust box being full, and being taken up, and may further provide a next specific action strategy for different situations, making operation of the autonomous cleaning robot meet requirements of a user well, and providing a good user experience. Further, the control system 130 may plan a cleaning routine and a cleaning manner, both of which are relatively efficient and reasonable, based on instant map information created through the SLAM, thereby improving the cleaning efficiency of the autonomous cleaning robot.

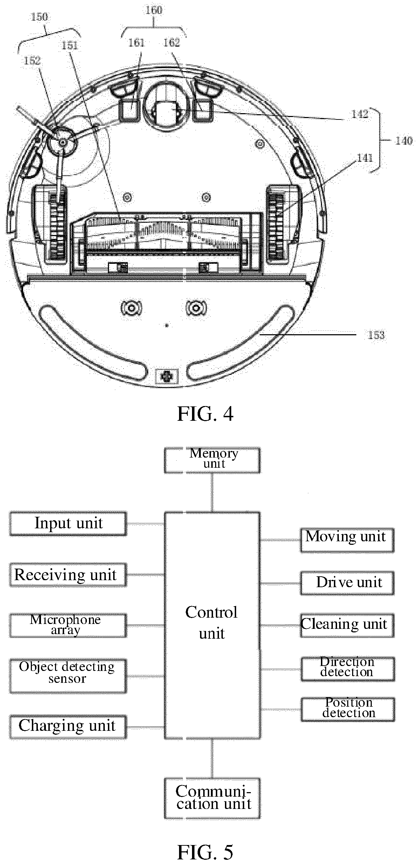

As illustrated in FIG. 4, the drive system 140 may drive the autonomous cleaning robot 100 to travel across the floor based on driving instructions having distance and angle information, such as x, y, and θ components. The drive system 140 includes a drive wheel module 141 which may control left and right wheels at the same time. To control movement of the machine more accurately, the drive wheel module 141 includes a left drive wheel module and a right drive wheel module. The left and right drive wheel modules are disposed opposite to each other along the transverse axis defined by the machine body 110. To enable the autonomous cleaning robot to move more stably on the floor or have a stronger motion ability, the autonomous cleaning robot may include one or more driven wheel 142, which includes, but are not limited to, an universal wheel. The drive wheel module includes a traveling wheel, a drive motor, and a control circuit configured to control the drive motor. The drive wheel module may further be connected to both a circuit configured to measure a drive current and an odometer. The drive wheel module 141 may be detachably connected to the machine body 110 to facilitate disassembly and maintenance. The drive wheel may have an offset drop-type suspension system, which is fastened to the machine body 110 of the autonomous cleaning robot in a movable manner, for example, rotatably attached to the machine body 110 of the autonomous cleaning robot, and configured to receive a spring bias downward and biased away from the machine body 110 of the autonomous cleaning robot. The spring bias is configured to keep the drive wheel in contact and traction with the floor with a grounding force, and a cleaning element of the autonomous cleaning robot 100 further contact the floor 10 with a pressure.

The cleaning system may be a dry cleaning system 150 and/or a wet cleaning system 153. As a dry cleaning system, main cleaning functions of the system are provided by a cleaning system 151 consisting of a brushroll, a dust box, a fan, an air outlet, and connecting components between the four. The brushroll with a degree of interference with the floor sweeps garbage on the floor, takes it to a front of a dust suction opening between the brushroll and the dust box, and then suctions it into the dust box by a gas with a suction force which is generated by the fan and passes through the dust box. Dust removal capacity of the floor sweeper may be represented by cleaning efficiency of the garbage. The cleaning efficiency is affected by the structure and materials of the brushroll, and is also affected by a wind power utilization rate of an air duct formed by the dust suction opening, the dust box, the fan, the air outlet and the connecting components between the four, and by a type and power of the fan. Compared with ordinary plug-in vacuum cleaners, improvement in dust removal capacity is more significant for cleaning robots with limited energy. The improvement in the dust removal capacity directly reduces energy requirements, that is, the machine that may clean floor of 80 square meters with one charge originally can be improved to clean 100 square meters or more with one charge. In addition, a service life of a battery can be further prolonged greatly by reducing the number of charging times, so that a frequency of battery replacements by a user may further be decreased. The improvement in the dust removal capacity relates to the most apparent and important user experience, and the user may directly draw a conclusion whether sweeping/wiping is well done or not. The dry cleaning system may further include an edge brush 152 provided with a rotating shaft that is angled relative to the floor for bringing debris into a region of the brushroll of the cleaning system.

The wet cleaning system 153 mainly includes a detachable fluid storage apparatus, a water tank 1531 for example, provided at a rear end of the chassis. The water tank 1531 is secured to a bottom end of the chassis by a snap structure or a plurality of securing screws. A bottom layer of the water tank includes a detachable mop 1532, which is attached to a bottom layer of the water tank 1531 through pasting.

The power supply system 160 includes a rechargeable battery, such as a nickel-metal hydride battery and a lithium battery. The rechargeable battery may be connected to a charging control circuit, a battery pack charging temperature detecting circuit, and a battery under-voltage monitoring circuit, which are further connected to a single chip microcomputer control circuit. The autonomous cleaning robot is connected to the charging station through a charging electrode (which may be provided as a first charging elastic sheet 161 and a second charging elastic sheet 162) disposed on a side of the machine body or under the chassis for charging.

The human-machine interaction system 170 includes a button on a panel of the autonomous cleaning robot, the button configured for a user to select a function, further includes a display screen and/or an indicator lamp and/or a speaker, the display, the indicator lamp and the speaker presenting the user a current state of the autonomous cleaning robot or function options, and may further include a mobile phone client program. For a navigated autonomous cleaning robot, a mobile phone client may present a user a map of an environment in which the device is located and the location of the autonomous cleaning robot, and may provide the user with more enriched and more humanized function options.

FIG. 5 illustrates a block diagram of electrical connection of an autonomous cleaning robot according to an embodiment of the present disclosure.

The autonomous cleaning robot according to the present embodiment may include a microphone array unit configured to recognize a voice of a user, a communication unit configured to communicate with a remote control device or another device, a moving unit configured to drive the machine body, a cleaning unit, and a memory unit configured to store information. An input unit (i.e., a button of a cleaning robot, or the like), an object detecting sensor, a charging unit, a microphone array unit, a direction detecting unit, a location detecting unit, a communication unit, a drive unit, and a memory unit may be connected to the control unit to transmit predetermined information to the control unit or receive predetermined information from the control unit.

The microphone array unit may compare voice input through the receiving unit with information stored in the memory unit to determine whether or not the input voice corresponds to an instruction. If it is determined that the input voice corresponds to an instruction, the corresponding instruction is transmitted to the control unit. If it is determined that the detected voice cannot match the information stored in the memory unit, the detected voice may be taken as noise and therefore is ignored.

For example, the detected voice corresponds to words "come, come here, get here, arrive here", and there is a text control instruction (come here) stored in the information of the memory unit corresponding to the words. In this case, the corresponding instruction may be transmitted to the control unit.

The direction detecting unit may detect a direction of the voice based a time difference or level of the voice input to the plurality of receiving units. The direction detecting unit transmits a detected direction of the voice to the control unit. The control unit may determine a moving path based on the detected direction of the voice by the direction detecting unit.

The location detecting unit may detect coordinates of the machine body in predetermined map information. In an embodiment, a current position of the machine body can be detected by comparing information detected by a camera and map information stored in the memory unit. In addition to the camera, the location detecting unit may further adopt a global positioning system (GPS).

In a broad sense, the location detecting unit may detect whether the machine body is located at a specific location or not. For example, the location detecting unit may include a unit configured to detect whether the machine body is located at the charging station or not.

For example, in a method of detecting whether the machine body is located at the charging station or not, whether or not the machine body is located at the charging station may be detected according to whether electric power is input into the charging unit or not. For another example, whether or not the machine body is located at the charging position may be detected by a charging position detecting unit disposed on the machine body or on the charging station.

The communication unit may transmit/receive predetermined information to/from the remote control device or another device. The communication unit may update map information of the autonomous cleaning robot.

The drive unit may operate the moving unit and the cleaning unit. The drive unit may move the moving unit along a moving path determined by the control unit.

The memory unit stores predetermined information correlated to operation of the cleaning robot. For example, map information of a region where the autonomous cleaning robot is located, control instruction information corresponding to a voice recognized by the microphone array unit, directional angle information detected by the direction detecting unit, location information detected by the location detecting unit, and obstacle information detected by the object detecting sensor may be stored in the memory unit.

The control unit may receive information detected by the receiving unit, the camera, and the object detecting sensor. The control unit may recognize the voice of the user, detect a direction in which the voice occurs, and detect a location of the autonomous cleaning robot based on the received information. In addition, the control unit can further operate the moving unit and the cleaning unit.

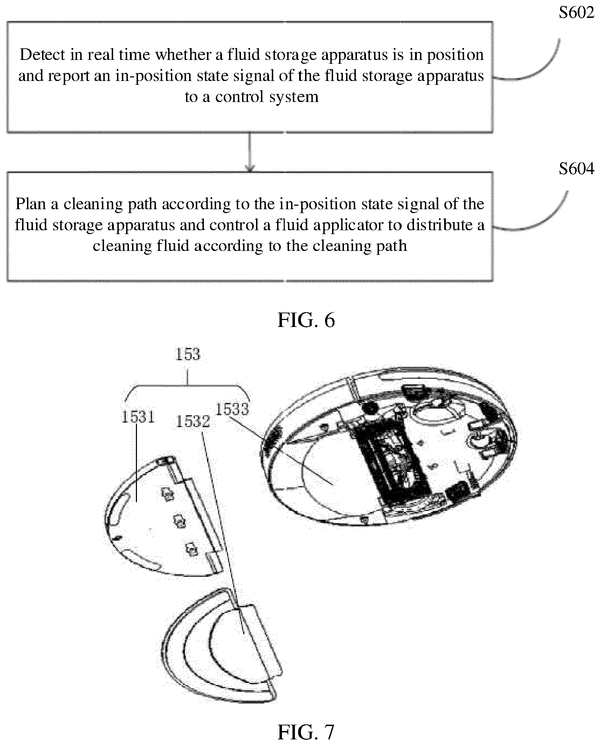

According to a specific implementation of the present disclosure, an embodiment of the present disclosure provides a cleaning robot, including: a chassis; a fluid applicator, carried on the chassis and configured to distribute a cleaning fluid on at least part of a cleaning width; a fluid storage apparatus, detachably connected to the chassis, wherein the fluid storage apparatus is in communication with the fluid applicator and configured to apply the cleaning fluid distributed by the fluid applicator to the ground; an in-position sensor, disposed in a recess 1533 of the chassis in which the fluid storage apparatus is mounted, as illustrated in FIG. 7, and configured to detect whether the fluid storage apparatus is in position and to report an in-position state signal of the fluid storage apparatus to a control system; and the control system, carried on the chassis and configured to plan a cleaning path according to the in-position state signal of the fluid storage apparatus and to control the fluid applicator to distribute the cleaning fluid according to the cleaning path.

The in-position sensor may be an infrared sensor, an inductive contact sensor, a gravity sensor, or the like, each sensor is configured on a circuit board on the chassis. Depending on the type of the sensor, a position in the recess 1533 in which the fluid storage apparatus is placed varies, for example, an infrared sensor may be disposed at a bottom corner of the recess 1533, so that in a case that the fluid storage apparatus is placed in the recess 1533, the infrared sensor may sense that an object has been placed in, and it is determined whether the fluid storage apparatus is loaded into the cleaning robot.

In an embodiment of the present disclosure, the fluid applicator includes a pump which is configured to distribute the cleaning fluid on at least part of the cleaning width. The pump is controlled by the control system to be turned on or turned off.

In an embodiment of the present disclosure, the in-position sensor detects in real time whether the fluid storage apparatus is in position, in a case that a detection signal indicates that the fluid storage apparatus is in position, the in-position sensor detects after a time interval, and in a case that the detection signal indicates that the fluid storage apparatus is not in position, the in-position sensor reports an out-of-position state signal to the control system and stops detection. In a case of starting cleaning or resuming cleaning after a pause, the cleaning robot determines whether the water tank is in position. If the water tank is in position, data of a non-mopping region is loaded into a program, an edge of the non-mopping region is labeled as an obstacle point on a cleaning map, and a timer which is triggered once every 30 ms is started to check whether a bumper in the non-mopping region is triggered. If the water tank is not in position, the non-mopping region is ignored and the labeled non-mopping region is deleted from the cleaning map.

In an embodiment of the present disclosure, the cleaning robot further includes: a navigation apparatus, receiving information about an operation region of the cleaning robot, the operation region including a mopping region and a non-mopping region, wherein the non-mopping region is activated in a case that the fluid storage apparatus is in position and is disabled in a case that the fluid storage apparatus is not in position.

In an embodiment of the present disclosure, the cleaning robot further includes: a position alarm, wherein the navigation apparatus detects in real time whether there is an intersection between an edge of a front half of the cleaning robot and the non-mopping region, and if there is an intersection, the position alarm is trigged to enable the cleaning robot to retreat outside of the non-mopping region. A trigger condition of the bumper in the non-mopping region is that there is an intersection between an edge of the front half of the cleaning robot and the non-mopping region (for example, if coordinates of a center of the cleaning robot are known, a radius of the cleaning robot, and orientation of the cleaning robot, coordinates of each point on the edge of the cleaning robot can be determined). If there is an intersection, the bumper in the non-mopping region is triggered, and the cleaning robot retreat until the bumper in the non-mopping region is no longer triggered, thereby preventing the cleaning robot from entering the non-mopping region.

In an embodiment of the present disclosure, the cleaning robot further includes: a wheel type drive, supporting the chassis and being operable to operate the robot on a cleaning surface of the cleaning robot; and one or more cleaning elements, carried on the chassis to clean an entirety of the cleaning width.

The cleaning robot according to the present disclosure can operate based on a preset non-mopping region. In a case of traveling to the non-mopping region, the cleaning robot can learn, from a map, about that the region is not suitable for being mopped, and may avoid the non-mopping region, thereby avoiding secondary pollution due to mopping unsuitable regions, improving user experience and improving cleaning efficiency.

As illustrated in FIG. 6, according to a specific implementation of the present disclosure, an embodiment of the present disclosure provides a method of control a cleaning robot, including: Step S602: Detecting in real time whether a fluid storage apparatus is in position and reporting an in-position state signal of the fluid storage apparatus to a control system.

In an embodiment of the present disclosure, detecting in real time whether the fluid storage apparatus is in position includes: detecting in real time whether the fluid storage apparatus is in position, in a case that a detection signal indicates that the fluid storage apparatus is in position, detecting again after an interval, and in a case that the detection signal indicates that the fluid storage apparatus is not in position, reporting an out-of-position state signal to the control system and stopping detecting. In a case of starting cleaning or resuming cleaning after a pause, the cleaning robot determines whether the fluid storage apparatus is in position. If the fluid storage apparatus is in position, data of the non-mopping region is loaded to a program, an edge of the non-mopping region is labeled as an obstacle point on a cleaning map, and a timer which is triggered once every 30 ms is started to check whether a bumper in the non-mopping region is triggered. If the fluid storage apparatus is not in position, the non-mopping region is ignored and the labeled non-mopping region is deleted from the cleaning map.

In an embodiment of the present disclosure, after detecting in real time whether the fluid storage apparatus is in position and reporting the in-position state signal of the fluid storage apparatus to the control system, the method further includes:
receiving information about an operation region of the cleaning robot, the operation region comprising a mopping region and a non-mopping region, wherein the non-mopping region is activated in a case that the fluid storage apparatus is in position and is disabled in a case that the fluid storage apparatus is not in position. The non-mopping region is a region that is effective only in a case that the water tank is in position. Adding and deleting of the non-mopping region are performed through an app, data of the non-mopping region is described by a quadrangle consisting coordinates of four vertex, and is stored in the cleaning robot.

In an embodiment of the present disclosure, the method further includes: detecting in real time whether there is an intersection between an edge of a front half portion of the cleaning robot and the non-mopping region, and if there is an intersection, making the cleaning robot to retreat outside of the non-mopping region. A trigger condition of the bumper in the non-mopping region is that there is an intersection between the edge of the front half portion of the cleaning robot and the non-mopping region (for example, if coordinates of a center of the cleaning robot is known, a radius of the cleaning robot, and orientation of the cleaning robot, coordinates of each point on the edge of the front half portion of the cleaning robot can be calculated). If there is an intersection, the bumper in the non-mopping region is triggered, and the cleaning robot retreats until the bumper in the non-mopping region is no longer triggered, thereby preventing the cleaning robot from entering the non-mopping region.

In an embodiment of the present disclosure, in a case that the non-mopping region is activated, the quadrangle of the non-mopping region is labeled as an obstacle. In a case of planning a path, the machine bypasses the non-mopping region according to the non-mopping region labeled as the obstacle on the map.

In an embodiment of the present disclosure, the non-mopping region is planned by the navigation apparatus autonomously in traveling or set by a user.

Step S604: A cleaning path is planned according to the in-position state signal of the fluid storage apparatus and a fluid applicator is controlled to distribute a cleaning fluid according to the cleaning path.

The control system of the cleaning robot controls the fluid storage apparatus to perform mopping. In a case of being in a mopping region, the fluid applicator is controlled to normally distribute the cleaning fluid; and in a case of encountering the non-mopping region, the fluid applicator retreats and bypasses the non-mopping region to perform mopping.

The cleaning robot according to the present disclosure can operate based on a preset non-mopping region. In a case of traveling to the non-mopping region, the cleaning robot can learn, from a map, about that the region is not suitable for being mopped, and can avoid the non-mopping region, thereby avoiding secondary pollution due to mopping unsuitable regions, improving user experience and improving cleaning efficiency.

An embodiment of the present disclosure provides a cleaning robot, including a processor and a memory. The memory stores computer program instructions that can be executed by the processor. The processor, during executing of the computer program instructions, implements the method steps of any of the foregoing embodiments.

Embodiments of the present disclosure provide a non-transitory computer-readable storage medium storing computer program instructions that, in a case of being called and executed by a processor, operations of the method as described in any of the embodiments.

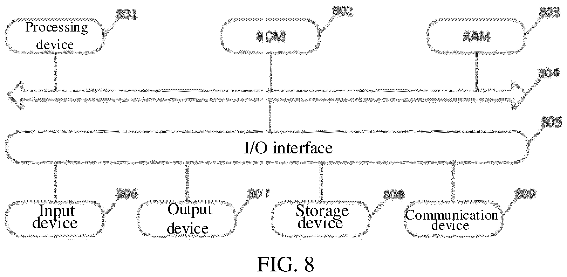

As illustrated in FIG. 8, the autonomous cleaning robot 800 may include a processing device (for example, a central processing unit, a graphics processor, or the like) 801, which may perform various appropriate actions and processes according to programs stored in a read-only memory (RAM) 802 or programs loaded into a random access memory (RAM) 803 from a storage device 808. The RAM 803 further stores various programs and data required for operation of the autonomous cleaning robot 800. The processing device 801, the ROM 802, and the RAM 803 are connected with each other through a bus 804. An input/output (I/O) interface 805 is further connected to the bus 804.

Typically, following devices may be connected to the I/O interface 805: an input device 806 including a touch screen, a touch panel, a keyboard, a mouse, a camera, a microphone, an accelerometer and a gyroscope or the like; an output device 807 including a liquid crystal display (LCD), a speaker, and a vibrator or the like; a storage device 808 including a magnetic tape and a hard disk or the like; and a communication device 809. The communication device 809 may allow the robot to communicate wirelessly or wiredly with another robot to exchange data. Although FIG. 8 illustrates the robot with various apparatuses, it should be understood that it is not required to implement or have all the apparatuses presented. More or fewer apparatuses may be implemented or provided instead.

In particular, according to an embodiment of the present disclosure, the process described above with reference to the flowchart may be implemented as a computer software program. For example, an embodiment of the present disclosure includes a computer program product including a computer program carried on a computer-readable medium, the computer program including program code for performing the method illustrated in the flowchart. In such an embodiment, the computer program may be downloaded and installed from a network through the communication device 809, or installed from the storage device 808, or installed from the ROM 802.In a case that the computer program is executed by the processing device 801, the above functions defined in the method according to the embodiment of the present disclosure are performed.

It should be noted that the computer-readable medium of the present disclosure may be a computer-readable signal medium or a computer-readable storage medium or any combination thereof. The computer-readable storage medium may be, for example, but not limited to, an electronic, magnetic, optical, electromagnetic, infrared, or semiconductor system, apparatus, or device, or any combination thereof. More specific examples of the computer-readable storage medium may include, but are not limited to: electrical connection with one or more wires, a portable computer disk, a hard disk, a random access memory (RAM), a read-only memory (ROM), an erasable programming read-only memory (EPROM or flash memory), an optical fiber, a portable compact disk read-only memory (CD-ROM), an optical storage apparatus, a magnetic storage apparatus, or any suitable combination thereof. In the present disclosure, the computer-readable storage medium may be any tangible medium that includes or stores a program that may be used by or used in combination by an instruction execution system, apparatus, or device. In the present disclosure, the computer-readable signal medium may include a data signal that is included in a baseband or propagated as part of a carrier wave, and carries computer-readable program code. Such a propagated data signal may use many forms, including but not limited to electromagnetic signals, optical signals, or any suitable combination thereof. The computer-readable signal medium may alternatively be any computer-readable medium other than a computer-readable storage medium, and the computer-readable signal medium may send, propagate, or transmit a program for use by or used in combination by an instruction execution system, apparatus, or device. Program code included in the computer-readable medium may be transmitted by using any appropriate medium, including but not limited to: wires, optical cables, radio frequency (RF), or the like, or any suitable combination thereof.

The computer-readable medium may be included in the foregoing robot, or may exist alone without being assembled to the robot.

Computer program code for performing the operations of the present disclosure may be written in one or more programming languages, or combinations thereof, which include object-oriented programming languages, such as Java, Smalltalk, C++, and further include procedural programming languages, such as "C" language or similar programming languages. The program code may be executed entirely on a user computer, partly on the user computer, as an independent software package, partly on the user computer, partly on a remote computer, or entirely on a remote computer or a server. In the case relating to the remote computer, the remote computer may be connected to the user computer through any network, including a local area network (LAN) or a wide area network (WAN), or connected to an external computer (such as Internet connection through an Internet service provider).

The flowchart and block diagrams in the accompanying drawings illustrate architectures, functions and operations that are possibly implemented by the systems, methods and computer program products according to various embodiments of the present disclosure. In this regard, each block in the flowchart or block diagram may represent a module, a program segment, or a part of code, which includes one or more executable instructions to implement a specified logical function. It should further be noted that in some alternative implementations, the functions marked in the blocks may alternatively occur in an order different from those marked in the accompanying drawings. For example, two blocks represented one after the other may actually be executed substantially in parallel, and may sometimes be executed in the reverse order, depending on the functions involved. It should further be noted that each block in the block diagrams and/or flowcharts, and combinations of blocks in the block diagrams and/or flowcharts, may be implemented by a dedicated hardware-based system that performs the specified function or operation, or may be implemented with a combination of dedicated hardware and computer instructions.

The units described in the embodiments of the present disclosure may be implemented by software or hardware. The name of the unit does not constitute a limitation on the unit itself in some cases.

The apparatus embodiments described above are only schematic, and the units described as separate parts may or may not be physically separated, and the parts displayed as units may or may not be physical units, that is, may be located at one place, or may be distributed across a plurality of network units. Some or all of the modules may be selected according to actual needs to achieve the objective of the solution of this embodiment. One of ordinary skill in the art may understand and implement without creative effect.

Finally, it should be noted that the above embodiments are only used to illustrate the technical solution of the present disclosure, but not limited thereto. Although the present disclosure has been described in detail with reference to the foregoing embodiments, one of ordinary skill in the art should understand that modifications to the technical solutions described in the foregoing embodiments, or equivalent replacements of some of the technical features thereof may be made, so that the essence of the corresponding technical solution does not depart from the scope of the technical solution of various embodiments of the present invention defined by the appended set of claims.

## Claims

1. A cleaning robot (100), comprising:
a chassis;
a fluid applicator (1532), carried on the chassis and configured to distribute a cleaning fluid on at least part of a cleaning width;
a fluid storage apparatus (1531), detachably connected to the chassis, wherein the fluid storage apparatus (1531) is in communication with the fluid applicator (1532) and configured to apply the cleaning fluid distributed by the fluid applicator (1532) to a ground;
an in-position sensor, disposed in a recess (1553) of the chassis in which the fluid storage apparatus (1531) is mounted, and configured to detect whether the fluid storage apparatus (1531) is in position and to report an in-position state signal of the fluid storage apparatus (1531) to a control system (130); and
the control system (130), carried on the chassis and configured to plan a cleaning path according to the in-position state signal of the fluid storage apparatus (1531) and control the fluid applicator (1532) to distribute the cleaning fluid according to the cleaning path;
**characterized in that**, the control system (130) is configured to plan a cleaning path according to the in-position state signal of the fluid storage apparatus (1531) by:
when the in-position state signal indicates that the fluid storage apparatus (1531) is in position, controlling loading data of a non-mopping region and controlling the cleaning robot to operate according to a preset non-mopping region.

2. The cleaning robot according to claim 1, where the fluid applicator (1532) comprises a pump which is configured to distribute the cleaning fluid on the at least part of the cleaning width.

3. The cleaning robot according to claim 1, wherein the in-position sensor detects in real time whether the fluid storage apparatus (1531) is in position, in a case that a detection signal indicates that the fluid storage apparatus (1531) is in position, detecting again after a time interval, and in a case that the detection signal indicates that the fluid storage apparatus (1531) is not in position, reporting an out-of-position state signal to the control system (130) and stopping detecting.

4. The cleaning robot according to any one of claims 1 to 3, further comprising:
a navigation apparatus, receiving information about an operation region of the cleaning robot (100), the operation region comprising a mopping region and the non-mopping region, wherein the non-mopping region is activated in a case that the fluid storage apparatus (1531) is in position and is disabled in a case that the fluid storage apparatus (1531) is not in position.

5. The cleaning robot according to claim 4, further comprising:
a position alarm, wherein the navigation apparatus detects whether there is an intersection between an edge of a front half portion of the cleaning robot (100) and the non-mopping region, and if there is an intersection, the position alarm is trigged to enable the cleaning robot (100) to retreat outside of the non-mopping region.

6. The cleaning robot according to any one of claims 1 to 3, further comprising:
a wheel type drive, supporting the chassis and being operable to operate the cleaning robot (100) on a cleaning surface of the cleaning robot (100); and one or more cleaning elements, carried on the chassis to clean an entirety of the cleaning width.

7. A method of control a cleaning robot, comprising:
detecting (S602) whether a fluid storage apparatus (1531) is in position and reporting an in-position state signal of the fluid storage apparatus (1531) to a control system;
planning (S604) a cleaning path according to the in-position state signal of the fluid storage apparatus (1531); and
controlling a fluid applicator (1532) to distribute a cleaning fluid according to the cleaning path;
**characterized in that**, planning (S604) a cleaning path according to the in-position state signal of the fluid storage apparatus (1531) comprises:
when the in-position state signal indicates that the fluid storage apparatus (1531) is in position, controlling loading data of a non-mopping region and controlling the cleaning robot to operate according to a preset non-mopping region.

8. The method according to claim 7, wherein detecting whether the fluid storage apparatus (1531) is in position comprises:
detecting whether the fluid storage apparatus (1531) is in position, in a case that a detection signal indicates that the fluid storage apparatus (1531) is in position, detecting after a time interval, and in a case that the detection signal indicates that the fluid storage apparatus (1531) is not in position, reporting an out-of-position state signal to the control system (130) and stopping detecting.

9. The method according to claim 8, wherein after detecting whether the fluid storage apparatus (1531) is in position and reporting the in-position state signal of the fluid storage apparatus (1531) to the control system (130), the method further comprises:
receiving information about an operation region of the cleaning robot (100), the operation region comprising a mopping region and the non-mopping region, wherein the non-mopping region is activated in a case that the fluid storage apparatus (1531) is in position and is disabled in a case that the fluid storage apparatus (1531) is not in position.

10. The method according to claim 9, wherein data of the non-mopping region is described by a quadrangle consisting coordinates of four vertex.

11. The method according to claim 9, further comprising:
detecting whether there is an intersection between an edge of a front half portion of the cleaning robot (100) and the non-mopping region, and if there is an intersection, enabling the cleaning robot (1531) to retreat outside of the non-mopping region.

12. The method according to claim 10, wherein in a case that the non-mopping region is activated, the quadrangle of the non-mopping region is labeled as an obstacle.

13. The method according to claim 10, wherein the non-mopping region is planned by the navigation apparatus autonomously in a traveling process or set by a user.

## Patentansprüche

1. Reinigungsroboter (100), umfassend:
ein Fahrgestell;
einen Fluidapplikator (1532), der auf dem Fahrgestell getragen wird und konfiguriert ist, um ein Reinigungsfluid auf mindestens einem Teil einer Reinigungsbreite zu verteilen;
eine Fluidspeichereinrichtung (1531), die abnehmbar mit dem Fahrgestell verbunden ist, wobei die Fluidspeichereinrichtung (1531) mit dem Fluidapplikator (1532) in Verbindung steht und konfiguriert ist, um das von dem Fluidapplikator (1532) verteilte Reinigungsfluid auf einen Boden aufzubringen;
einen In-Position-Sensor, der in einer Aussparung (1553) des Fahrgestells angeordnet ist, in der die Fluidspeichereinrichtung (1531) montiert ist, und der konfiguriert ist, um zu erkennen, ob die Fluidspeichereinrichtung (1531) in Position ist, und um ein In-Position-Zustandssignal der Fluidspeichereinrichtung (1531) an ein Steuersystem (130) zu melden; und
das Steuersystem (130), das auf dem Fahrgestell getragen wird und konfiguriert ist, um einen Reinigungspfad entsprechend dem In-Position-Zustandssignal der Fluidspeichereinrichtung (1531) zu planen und den Fluidapplikator (1532) zu steuern, um das Reinigungsfluid entsprechend dem Reinigungspfad zu verteilen;
**dadurch gekennzeichnet, dass** das Steuersystem (130) konfiguriert ist, um einen Reinigungsweg gemäß dem In-Position-Zustandssignal der Fluidspeichereinrichtung (1531) zu planen durch:
wenn das In-Position-Zustandssignal anzeigt, dass die Fluidspeichereinrichtung (1531) in Position ist, Steuern der Ladedaten eines Nicht-Wischbereichs und Steuern des Reinigungsroboters, um gemäß einem voreingestellten Nicht-Wischbereich zu arbeiten.

2. Reinigungsroboter nach Anspruch 1, wobei der Fluidapplikator (1532) eine Pumpe umfasst, die konfiguriert ist, um das Reinigungsfluid auf dem mindestens einen Teil der Reinigungsbreite zu verteilen.

3. Reinigungsroboter nach Anspruch 1, wobei der In-Position-Sensor in Echtzeit erkennt, ob sich die Fluidspeichereinrichtung (1531) in Position befindet, in einem Fall, in dem ein Erkennungssignal anzeigt, dass sich die Fluidspeichereinrichtung (1531) in Position befindet, erneutes Erkennen nach einem Zeitintervall, und in einem Fall, in dem das Erkennungssignal anzeigt, dass sich die Fluidspeichereinrichtung (1531) nicht in Position befindet, Melden eines Außer-Position-Zustandssignals an das Steuersystem (130) und Beenden der Erkennung.

4. Reinigungsroboter nach einem der Ansprüche 1 bis 3, ferner umfassend:
eine Navigationseinrichtung, die Informationen über einen Betriebsbereich des Reinigungsroboters (100) empfängt, wobei der Betriebsbereich einen Wischbereich und den Nicht-Wischbereich umfasst, wobei der Nicht-Wischbereich aktiviert wird, wenn die Fluidspeichereinrichtung (1531) in Position ist, und deaktiviert wird, wenn die Fluidspeichereinrichtung (1531) nicht in Position ist.

5. Reinigungsroboter nach Anspruch 4, ferner umfassend:
einen Positionsalarm, wobei die Navigationseinrichtung erkennt, ob eine Überschneidung zwischen einer Kante eines vorderen Halbabschnitts des Reinigungsroboters (100) und dem Nicht-Wischbereich vorliegt, und wenn eine Überschneidung vorliegt, der Positionsalarm ausgelöst wird, um dem Reinigungsroboter (100) zu ermöglichen, sich aus dem Nicht-Wischbereich zurückzuziehen.

6. Reinigungsroboter nach einem der Ansprüche 1 bis 3, ferner umfassend:
einen radartigen Antrieb, der das Fahrgestell trägt und betreibbar ist, um den Reinigungsroboter (100) auf einer Reinigungsoberfläche des Reinigungsroboters (100) zu betreiben; und ein oder mehrere Reinigungselemente, die auf dem Fahrgestell getragen werden, um eine Gesamtheit der Reinigungsbreite zu reinigen.

7. Verfahren zum Steuern eines Reinigungsroboters, umfassend:
Erkennen (S602), ob eine Fluidspeichereinrichtung (1531) in Position ist, und Melden eines In-Position-Zustandssignals der Fluidspeichereinrichtung (1531) an ein Steuersystem;
Planen (S604) eines Reinigungspfades gemäß dem In-Position-Zustandssignal der Fluidspeichereinrichtung (1531); und
Steuern eines Fluidapplikators (1532), um ein Reinigungsfluid entsprechend dem Reinigungspfad zu verteilen;
**dadurch gekennzeichnet, dass** das Planen (S604) eines Reinigungspfads gemäß dem In-Position-Zustandssignal der Fluidspeichereinrichtung (1531) umfasst:
wenn das In-Position-Zustandssignal anzeigt, dass die Fluidspeichereinrichtung (1531) in Position ist, Steuern der Ladedaten eines Nicht-Wischbereichs und Steuern des Reinigungsroboters, um gemäß einem voreingestellten Nicht-Wischbereich zu arbeiten.

8. Verfahren nach Anspruch 7, wobei das Erkennen, ob die Fluidspeichereinrichtung (1531) in Position ist, umfasst:
Erkennen, ob sich die Fluidspeichereinrichtung (1531) in Position befindet, in einem Fall, in dem ein Erkennungssignal anzeigt, dass sich die Fluidspeichereinrichtung (1531) in Position befindet, Erkennen nach einem Zeitintervall, und in einem Fall, in dem das Erkennungssignal anzeigt, dass sich die Fluidspeichereinrichtung (1531) nicht in Position befindet, Melden eines Außer-Position-Zustandssignals an das Steuersystem (130) und Beenden der Erkennung.

9. Verfahren nach Anspruch 8, wobei das Verfahren nach dem Erkennen, ob sich die Fluidspeichereinrichtung (1531) in Position befindet, und dem Melden des In-Position-Zustandssignals der Fluidspeichereinrichtung (1531) an das Steuersystem (130), ferner umfasst:
Empfangen von Informationen über einen Betriebsbereich des Reinigungsroboters (100), wobei der Betriebsbereich einen Wischbereich und den Nicht-Wischbereich umfasst, wobei der Nicht-Wischbereich aktiviert wird, wenn die Fluidspeichereinrichtung (1531) in Position ist, und deaktiviert wird, wenn die Fluidspeichereinrichtung (1531) nicht in Position ist.

10. Verfahren nach Anspruch 9, wobei die Daten des Nicht-Wischbereichs durch ein Viereck bestehend aus Koordinaten von vier Eckpunkten beschrieben werden.

11. Verfahren nach Anspruch 9, ferner umfassend:
Erkennen, ob eine Überschneidung zwischen einer Kante eines vorderen Halbabschnitts des Reinigungsroboters (100) und dem Nicht-Wischbereich besteht, und wenn eine Überschneidung besteht, Ermöglichen des Zurückziehens des Reinigungsroboters (1531) aus dem Nicht-Wischbereich.

12. Verfahren nach Anspruch 10, wobei in einem Fall, in dem der Nicht-Wischbereich aktiviert ist, das Viereck des Nicht-Wischbereichs als Hindernis gekennzeichnet wird.

13. Verfahren nach Anspruch 10, wobei der Nicht-Wischbereich von der Navigationseinrichtung autonom in einem Fahrvorgang geplant oder von einem Benutzer festgelegt wird.

## Revendications

1. Robot de nettoyage (100), comprenant :
un châssis ;
un applicateur de fluide (1532), porté sur le châssis et configuré pour distribuer un fluide de nettoyage sur au moins une partie d'une largeur de nettoyage ;
un appareil de stockage de fluide (1531), relié de manière détachable au châssis, dans lequel l'appareil de stockage de fluide (1531) est en communication avec l'applicateur de fluide (1532) et configuré pour appliquer le fluide de nettoyage distribué par l'applicateur de fluide (1532) sur un sol ;
un capteur en position, disposé dans un évidement (1553) du châssis dans lequel l'appareil de stockage de fluide (1531) est monté, et configuré pour détecter si l'appareil de stockage de fluide (1531) est en position et pour transmettre un signal d'état en position de l'appareil de stockage de fluide (1531) à un système de commande (130) ; et
le système de commande (130), porté sur le châssis et configuré pour planifier un chemin de nettoyage selon le signal d'état en position de l'appareil de stockage de fluide (1531) et commander l'applicateur de fluide (1532) pour distribuer le fluide de nettoyage selon le chemin de nettoyage ;
**caractérisé en ce que** le système de commande (130) est configuré pour planifier un chemin de nettoyage selon le signal d'état en position de l'appareil de stockage de fluide (1531) par :
lorsque le signal d'état en position indique que l'appareil de stockage de fluide (1531) est en position, la commande de données de chargement d'une région de non-passage de serpillière et la commande du robot de nettoyage pour qu'il fonctionne selon une région de non-passage de serpillière prédéfinie.

2. Robot de nettoyage selon la revendication 1, où l'applicateur de fluide (1532) comprend une pompe qui est configurée pour distribuer le fluide de nettoyage sur l'au moins une partie de la largeur de nettoyage.

3. Robot de nettoyage selon la revendication 1, dans lequel le capteur en position détecte en temps réel si l'appareil de stockage de fluide (1531) est en position, dans un cas où un signal de détection indique que l'appareil de stockage de fluide (1531) est en position, détecte à nouveau après un intervalle de temps, et dans un cas où le signal de détection indique que l'appareil de stockage de fluide (1531) n'est pas en position, transmet un signal d'état hors position au système de commande (130) et arrête la détection.

4. Robot de nettoyage selon l'une quelconque des revendications 1 à 3, comprenant en outre :
un appareil de navigation, recevant des informations sur une région de fonctionnement du robot de nettoyage (100), la région de fonctionnement comprenant une région de passage de serpillière et la région de non-passage de serpillière, dans lequel la région de non-passage de serpillière est activée dans un cas où l'appareil de stockage de fluide (1531) est en position et est désactivée dans un cas où l'appareil de stockage de fluide (1531) n'est pas en position.

5. Robot de nettoyage selon la revendication 4, comprenant en outre :
une alarme de position, dans lequel l'appareil de navigation détecte s'il y a une intersection entre un bord d'une demi-partie avant du robot de nettoyage (100) et la région de non-passage de serpillière, et s'il y a une intersection, l'alarme de position est déclenchée pour permettre au robot de nettoyage (100) de se retirer à l'extérieur de la région de non-passage de serpillière.

6. Robot de nettoyage selon l'une quelconque des revendications 1 à 3, comprenant en outre :
un entraînement de type roue, supportant le châssis et pouvant fonctionner pour faire fonctionner le robot de nettoyage (100) sur une surface de nettoyage du robot de nettoyage (100) ; et un ou plusieurs éléments de nettoyage, portés sur le châssis pour nettoyer une totalité de la largeur de nettoyage.

7. Procédé de commande d'un robot de nettoyage, comprenant :
le fait de détecter (S602) si un appareil de stockage de fluide (1531) est en position et la transmission d'un signal d'état en position de l'appareil de stockage de fluide (1531) à un système de commande ;
la planification (S604) d'un chemin de nettoyage selon le signal d'état en position de l'appareil de stockage de fluide (1531) ; et
la commande d'un applicateur de fluide (1532) pour distribuer un fluide de nettoyage selon le chemin de nettoyage ;
**caractérisé en ce que** la planification (S604) d'un chemin de nettoyage selon le signal d'état en position de l'appareil de stockage de fluide (1531) comprend :
lorsque le signal d'état en position indique que l'appareil de stockage de fluide (1531) est en position, la commande de données de chargement d'une région de non-passage de serpillière et la commande du robot de nettoyage pour qu'il fonctionne selon une région de non-passage de serpillière prédéfinie.

8. Procédé selon la revendication 7, dans lequel le fait de détecter si l'appareil de stockage de fluide (1531) est en position comprend :
le fait de détecter si l'appareil de stockage de fluide (1531) est en position, dans un cas où un signal de détection indique que l'appareil de stockage de fluide (1531) est en position, la détection après un intervalle de temps, et dans un cas où le signal de détection indique que l'appareil de stockage de fluide (1531) n'est pas en position, la transmission d'un signal d'état hors position au système de commande (130) et l'arrêt de la détection.

9. Procédé selon la revendication 8, dans lequel, après avoir détecté si l'appareil de stockage de fluide (1531) est en position et transmis le signal d'état en position de l'appareil de stockage de fluide (1531) au système de commande (130), le procédé comprend en outre :
la réception d'informations concernant une région de fonctionnement du robot de nettoyage (100), la région de fonctionnement comprenant une région de passage de serpillière et la région de non-passage de serpillière, dans lequel la région de non-passage de serpillière est activée dans un cas où l'appareil de stockage de fluide (1531) est en position et est désactivée dans un cas où l'appareil de stockage de fluide (1531) n'est pas en position.

10. Procédé selon la revendication 9, dans lequel des données de la région de non-passage de serpillière sont décrites par un quadrilatère constitué de coordonnées de quatre sommets.

11. Procédé selon la revendication 9, comprenant en outre :
le fait de détecter s'il y a une intersection entre un bord d'une demi-partie avant du robot de nettoyage (100) et la région de non-passage de serpillière, et s'il y a une intersection, le fait de permettre au robot de nettoyage (1531) de se retirer à l'extérieur de la région de non-passage de serpillière.

12. Procédé selon la revendication 10, dans lequel, dans un cas où la région de non-passage de serpillière est activée, le quadrilatère de la région de non-passage de serpillière est étiqueté comme étant un obstacle.

13. Procédé selon la revendication 10, dans lequel la région de non-passage de serpillière est planifiée par l'appareil de navigation de manière autonome dans un processus de déplacement ou définie par un utilisateur.
